Europäisches Patentamt

European Patent Office

Office européen des brevets

(19)

(11) **EP 0 750 174 B1**

(12) **EUROPÄISCHE PATENTSCHRIFT**

(45) Veröffentlichungstag und Bekanntmachung des Hinweises auf die Patenterteilung:
**23.02.2000 Patentblatt 2000/08**

(51) Int Cl.7: **G01B 9/02**

(21) Anmeldenummer: **96109740.9**

(22) Anmeldetag: **18.06.1996**

(54) **Referenzinterferometer mit variabler Wellenlänge**

Reference interferometer with variable wavelength

Interféromètre de référence à longueur d'onde variable

(84) Benannte Vertragsstaaten:
**AT CH DE ES FR GB LI**

(30) Priorität: **20.06.1995 DE 19522263**

(43) Veröffentlichungstag der Anmeldung:
**27.12.1996 Patentblatt 1996/52**

(73) Patentinhaber: **CARL ZEISS JENA GmbH**
**07745 Jena (DE)**

(72) Erfinder:
• **Bechstein, Karl-Heinz**
**07749 Jena (DE)**
• **Möller, Beate**
**07743 Jena (DE)**
• **Salewski, Klaus-Dieter, Dr.**
**17489 Greifswald (DE)**

(74) Vertreter: **Niestroy, Manfred et al**
**Patentanwälte**
**Geyer, Fehners & Partner**
**Sellierstrasse 1**
**07745 Jena (DE)**

(56) Entgegenhaltungen:
**EP-A- 0 623 802       WO-A-92/10719**
**DE-A- 3 730 091       DE-A- 4 139 839**
**US-A- 3 551 051**

## Beschreibung

Die Erfindung betrifft ein Referenzinterferometer mit variabler Wellenlänge, das über einen Interferometerteiler, einen Referenzstrahlengang sowie einen zwischen zwei Planspiegeln verlaufenden gefalteten Meßstrahlengang verfügt. Das Interferometer ist zum hochgenauen Messen von Längen geeignet.

Interferometrische Messungen einer Streckenlänge werden auf die Differenz von Phasenwinkeln des Interferenzsignals zurückgeführt. Grundsätzlich werden zwei Möglichkeiten der interferometrischen Längenmessung unterschieden:

Bei einer konstanten Wellenlänge und einem variablen Gangunterschied wird der Meßreflektor längs der zu messenden Strecke bewegt und die resultierende Phasenänderung mittels fotoelektrischer Detektoren ermittelt. Gemäß einer weiteren Möglichkeit der interferometrischen Längenmessung mit variabler Wellenlänge und konstantem Gangunterschied wird bei ruhendem Meßreflektor die durch Veränderung der Wellenlänge hervorgerufene Phasenänderung gemessen. Diese Methode ist in der Patentschrift US 4.907.886 offenbart. Die Interferometrie mit variabler Wellenlänge ist auch unter dem Begriff "Absolute Distanzinterferometrie" (ADI) bekannt, wobei die unterschiedlichen Wellenlängen entweder aus verschiedenen Spektrallinien einer Lichtquelle oder aus der kontinuierlichen Durchstimmung eines Lasers resultieren.

Bekannte Verfahren der absoluten Distanzinterferometrie verwenden mindestens einen Laser mit durchstimmbarer Wellenlänge. Die einzelnen Verfahren hierzu unterscheiden sich in der Art und Weise der Detektion der Phasenänderung. Anordnungen mit zwei Lasern nutzen dabei das Heterodynsignal und führen die notwendige Phasendifferenzbildung mittels Analogschaltungen, wie Mischer und Filter, durch.

Die DE 4139839 A1 beschreibt eine Anordnung nach dem Superheterodyn-Prinzip, welche die Bestimmung der zwischen zwei Single-Mode-Lasern generierbaren Schwebungsfrequenz gestattet und unter Verwendung eines Referenzinterferometers eine Distanzmessung erlaubt. Dabei wird die Wellenlänge eines der beiden Laser monoton variiert. Alle damit verbundenen Phasenwinkeländerungen der Interferenzsignale werden registriert. Aus den ermittelten Phasenänderungen sowie der Reflektordistanz des Referenzinterferometers wird die Berechnung der Schwebungsfrequenzänderung sowie der unbekannten Reflektordistanz des Meßinterferometers vorgenommen. Die Beschreibung der Anordnung entält den Hinweis auf zwei im Meßstrahlengang so angeordnete Planspiegel, daß ein vom Interferometer kommender, in den Raum zwischen den Planspiegeln eingekoppelter Lichtstrahl innerhalb dieses Raumes mehrfach von Planspiegel zu Planspiegel reflektiert und dann wieder ausgekoppelt wird. Nachteilig dabei ist, daß diese Anordnung bei hinreichend großer Länge des Meßstrahlenganges bzw. einer großer Anzahl an Reflexionen ein großes Bauvolumen erfordert, weil die Strahlführung in einer Ebene erfolgt und die Abstände von Reflexort zu Reflexort auf den Planspiegeln relativ groß sein müssen, um an der Orten der Strahlein- und Strahlauskopplung eine Überlagerung mehrerer Reflexorte und damit Ungenauigkeiten zu vermeiden.

Die klassische Längeninterferometrie (LI), bei der mit konstanter Wellenlänge und variablem Gangunterschied gearbeitet wird, führt die gemessene Phasenänderung durch die optische Wellenlänge auf den Längenstandard (Lichtgeschwindigkeit * Zeit) zurück. Bei der Interferometrie mit variablen Wellenlängen und konstantem Gangunterschied wird der Maßanschluß vorteilhaft durch Vergleichsmessungen mit einem körperlichen Längennormal realisiert.

Die gemessene Distanz m läßt sich auch bei variabler Wellenlänge auf einfache Weise an den Längenstandard anschließen, wenn die im Meßinterferometer beobachtete Phasenänderung $\Phi_m$ zur Phasenänderung $\Phi_k$ in einem Referenzinterferometer bekannter Referenzdistanz k ins Verhältnis gesetzt wird. Unter bestimmten Bedingungen gilt dann die Beziehung $m/k = \Phi_m/\Phi_k$.

Die Meßunsicherheit hängt dabei u.a. von der relativen Auflösung in k ab, so daß für praktische Anwendungen die Strecke k ca. $10^7$ Phasenmeßschritte groß sein muß. Die innerhalb des Referenzinterferometers realisierte konstante Reflektordistanz wird durch einen zwischen zwei ebenen Spiegeln infolge Mehrfachreflexion erzielten langen Lichtweg vervielfacht.

In "Physik in unserer Zeit", Verlagsgesellschaft Weinheim, 16. Jahrgang 1985, Nr.S, Seite 138 ff, werden eine Methode und eine Einrichtung dazu beschrieben, bei welcher das Licht nach mehrfacher Reflexion an zwei Konkavspiegeln die Einrichtung wieder durch die Eintrittsöffnung verläßt. Mit dieser Anordnung sind sehr große Lichtwege realisierbar, da einmal die Divergenz des Laserlichtes durch die Spiegelform kompensiert wird und zum anderen die Reflexionsorte bei den Spiegeln auf Kreisbahnen liegen. Nachteilig ist jedoch auch bei diesem Vorschlag, daß die Reflexionsorte auf den Spiegeln weit auseinander liegen müssen, um an den Orten der Ein- bzw. Auskopplung des Meßstrahlenganges Überlagerungen von Reflexionen und damit Meßunsicherheiten zu vermeiden, was wiederum ein verhältnismäßig großes Bauvolumen der Anordnung zur Folge hat.

Der Erfindung liegt die Aufgabe zugrunde, ein Referenzinterferometer mit variabler Wellenlänge zu schaffen, welches eine große optische Weglänge in freier Atmosphäre auf kleinstem Raum realisiert und dabei hohe Stabilität, Genauigkeit und Funktionssicherheit gewährleistet.

Erfindungsgemäß wird diese Aufgabe für ein Referenzinterferometer mit variabler Wellenlänge, welches über einen Interferometerteiler, einen Referenzstrahlengang und einen zwischen zwei Spiegeln verlaufenden gefalteten Meßstrahlengang verfügt und bei dem ein distanzhaltendes Element zur Realisierung einer festen gegenseitigen Lage der Spiegel vorgesehen ist, ein in den Raum zwischen den Spiegeln eingekoppelter Lichtstrahl als Meßstrahlengang mehrfach von Spiegel zu Spiegel reflektiert und schließlich aus diesem Raum wieder ausgekoppelt wird, dadurch gelöst, daß zwei Planspiegel definiert so zueinander angeordnet sind, daß die Reflexionsorte des Lichtstrahles auf den reflektierenden Flächen des einen wie auch des anderen der beiden Planspiegel auf einer Parabelkurve liegen. Im ersten der beiden Planspiegel ist eine Eintrittsöffnung zur Einkopplung des Lichtstrahles vorgesehen, während der zweite der beiden Planspiegel eine Austrittsöffnung zur Auskopplung des Lichtstrahles aufweist. Dem zweiten Planspiegel ist ein Retroreflektor so nachgeordnet, daß der auf ihn auftreffende Lichtstrahl auf dem gleichen oder nahezu gleichen Wege an den Eintrittsort oder in dessen Nähe in der Eintrittsöffnung zurückgeführt wird. Die Eintrittsrichtung des Lichtstrahles in den Raum zwischen den Planspiegeln ist in einem Dreikoordinatensystem X;Y;Z, in welchem der Eintrittsort dem Koordinatenursprung entspricht und die reflektierende Fläche des ersten Planspiegels in der Ebene X;Y liegt, so festgelegt, daß sie mit der Ebene Y;Z einen Winkel y und mit der Ebene X;Z einen Winkel a einschließt. In demselben Koordinatensystem ist die Lage der Planspiegel zueinander so gewählt, daß, in der Ebene Y;Z gemessen, die reflektierende Fläche des zweiten Planspiegels mit einem Winkel φ und, in der Ebene X;Z gemessen, mit einem Winkel δ gegen die reflektierende Fläche des ersten Planspiegels geneigt ist.

Damit wird erreicht, daß der Lichtstrahl zwischen den definiert zueinander geneigten Planspiegeln mehrfach reflektiert und anschließend mittels des im Meßstrahlengang angeordneten Retroreflektors so umgelenkt wird, daß er die Anordnung nach nochmaligem Durchlaufen parallel zu sich selbst wieder verläßt. Der wesentliche Vorteil im Vergleich zum Stand der Technik aber besteht darin, daß die Reflexionsorte auf den Planspiegeln in den Bereichen der Ein- und Austrittsöffnungen einen relativ großen Abstand zueinander haben, woraus sich eine hohe Funktionssicherheit beim Ein- und Auskoppeln des Meßstrahles ergibt; in den von der Ein- und Austrittsöffnung entfernten Bereichen jedoch werden, mit dem Verlauf der Parabelkurve zu- bzw. abnehmend, die Abstände zwischen den Reflexorten auf beiden Planspiegeln kleiner und überlagern sich in Scheitel der Parabel sogar, so daß eine große optische Weglänge bei geringem Platzbedarf für den Referenzstrahlengang erzielbar ist, wodurch eine präzise Längenmessung bei kleinem Geräteaufbau möglich wird.

Eine vorteilhafte Winkelkombination besteht darin, den Winkel φ=0 zu wählen. Das hat eine zur Ebene X;Z symmetrische Parabelkurve zur Folge. Der Winkel γ sollte dann die Forderung

$$\gamma = \arctan \Delta y / 2nl$$

erfüllen und die Winkel $\alpha$ und $\delta$ den Bedingungen genügen:

$$\alpha - \delta = d/2l \qquad \text{und} \qquad \alpha = \delta/2*(n - 1/n)$$

mit n der Gesamtanzahl Reflexionen an beiden Spiegeln, l der Länge der Vergleichsstrecke, d dem Abstand des Eintrittsortes (O) vom benachbarten Reflexort (13) auf demselben Planspiegel (8) und $\Delta y$ dem Abstand zwischen zwei Reflexorten zwischen Eintrittsort (O) und letztem Reflex auf dem Planspiegel (8) in Richtung der Koordinate Y. Die Anzahl der Reflexionen je Planspiegel beträgt in diesem Fall n=16.

Grundsätzlich gilt, daß die Lage der Reflexe in X- und Y-Richtung völlig unabhängig behandelt werden kann. Stehen die Spiegel z.B. in der Y;Z-Ebene (Winkel φ) parallel, dann bestimmt der zugehörige Einfallswinkel γ den konstanten Abstand der Reflexorte in Richtung Y.

Die räumliche Trennung der Reflexe nahe dem Eintrittsort kann mit der Variation der Winkel $\alpha$ und $\delta$ beeinflußt werden, unter der Voraussetzung, daß beide Winkel $\alpha$ und $\delta$ den o.g. Bedingungen genügen. Der parabelförmige Umlauf wird erreicht, wenn die Parabelgleichung

$$x(i) = l*\delta/2 + l\alpha i - l\delta/2*i^2$$

mit i = 1,3,5,...31 ein Maximum hat, was immer durch entgegengesetzt gerichtete Winkel $\alpha$ und $\delta$ erzielbar ist; d.h. $\alpha$ beeinflußt das Hineinlaufen in die Vergleichsstrecke, $\delta$ das Hinauslaufen.

Die Größe der Reflektoren folgt dann aus dem Extremum der Parabel, worin

$$x_{ext} = 1/2\,(\delta + \alpha^2/\delta)$$

die Lage des Reflexes der größten x-Koordinate auf dem Planspigel ist. Dieser muß dann in seiner Ausdehnung noch um mindestens einen Strahldurchmesser größer sein.

Vorteilhaft ist es, die Retroreflektoren als Tripel- oder Kugelreflektoren auszubilden, womit erreicht wird, daß der zurücklaufende Lichtstrahl zum hinlaufenden hinreichend parallel ausgerichtet ist.

Ein weiterer Vorteil besteht darin, daß durch den doppel-T-förmigen Aufbau der aus Distanzhalter und Planspiegel bestehenen Anordnung der gefaltete Lichtstrahl außerhalb des Distanzhalters geführt werden kann, ohne daß eine Kollisionsgefahr mit dem Distanzhalter möglich ist.

Eine distanzbeständige Befestigung der Planspiegel am Distanzhalter und eine robuste Bauweise werden durch eine stoffschlüssige Verbindung, wie Kleben, Schweißen, Löten oder Ansprengen, erreicht.

Eine weitere Möglichkeit besteht darin, das distanzhaltende Element als Hohlkörper auszubilden und den gefalteten Strahlengang innerhalb dieses Hohlkörpers zu führen. Damit sind auch definierte Umweltbedingungen für diesen Strahlengang realisierbar.

Eine sehr robuste Einrichtung des Referenzinterferometers ergibt sich ferner, wenn der Interferometerteiler mit dem einen Planspiegel und der Meß- und Referenzreflektor mit dem anderen Planspiegel unmittelbar verbunden sind. Bei dieser Ausbildung unterscheiden sich die optischen Wege des Meß- und Referenzstrahlenganges lediglich um den Betrag der gefalteten Lichtstrahllänge. Ferner kompensieren sich bei einer solchen Anordnung thermische Längenänderungen außerhalb des gefalteten Lichtweges in beiden Strahlengängen.

Die Erfindung soll nachstehend an einem Ausführungsbeispiel näher erläutert werden. In den zugehörigen Zeichnung zeigen

Fig.1 das erfindungsgemäße Referenzinterferometer in einer Prinzipdarstellung

Fig.2 eine erfindungsgemäße Anordnung zur Strahlenfaltung mit Planspiegeln und Distanzhalter

Fig.3 die erfindungsgemäße Anordnung zur Strahlenfaltung mit Darstellung der Winkelverhältnisse in Blickrichtung auf die Ebene X;Z und auf die Ebene Y;Z

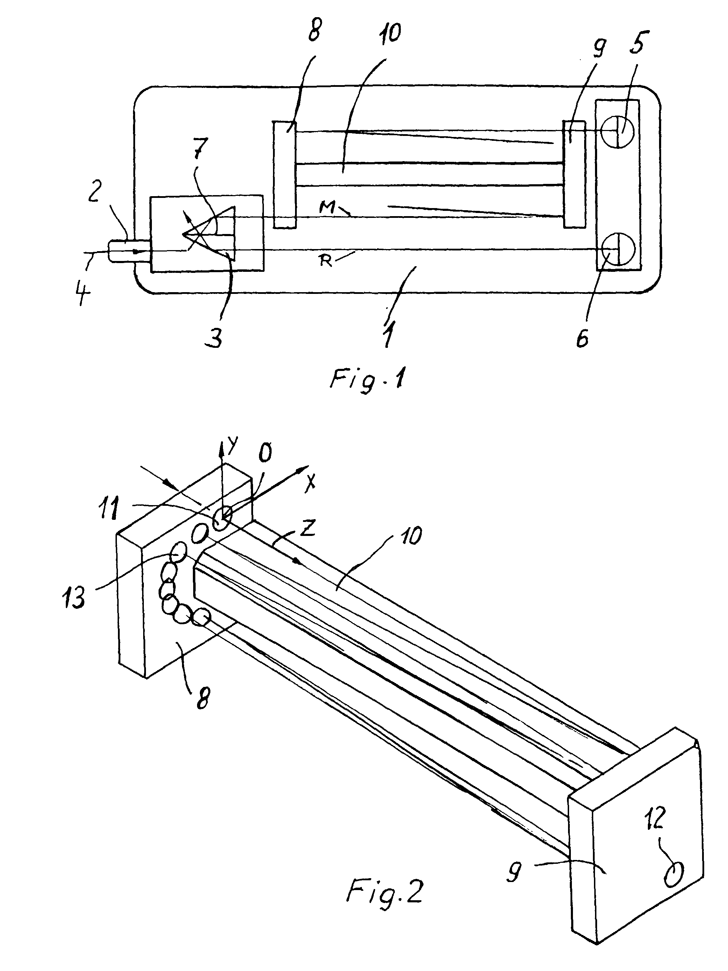

Wie Fig. 1 zeigt, sind die einzelnen Bauteile des Referenzinterferometers auf einer formstabilen Basisplatte 1 angeordnet. So befindet sich auf dieser Basisplatte 1, einem als Koppelobjektiv dienenden Kollimationsobjektiv 2 nachgeordnet, ein Interferometerteiler 3, welcher z.B. ein an sich bekanntes Köstersprisma sein kann. Dieser Interferometerteiler 3 teilt den durch einen Lichtleiter 4 über das Kollimationsobjektiv 2 eingeleiteten Lichtstrahl in einen Meß- und Referenzstrahlengang M und R. An dem vom Interferometerteiler 3 entfernten Ende der Basisplatte 1 sind im Meß- und im Referenzstrahlengang in einem konstanten Abstand von der Teilerfläche 7 des Interferometerteilers 3 jeweils ein Retroreflektor 5 und ein Referenzreflektor 6 vorgesehen, welche vorteilhaft als Tripel- oder Kugelreflektor ausgebildet sind.

Im Meßstrahlengang M ist eine aus einem ersten Planspiegel 8, einem zweiten Planspiegel 9 und einem distanzhaltenden Element 10 bestehende Anordnung zur Faltung des Meßstrahlenganges zwischen dem Interferometerteiler 3 und dem Meßreflektor 5 vorgesehen (Fig.2). Das distanzhaltende Element 10, welches vorzugsweise aus einem thermisch invarianten und alterungsbeständigen Material, wie z.B. aus Invar oder aus einem glaskeramischen Werkstoff, besteht, gewährleistet einen konstanten Abstand der beiden Planspiegel 8 und 9. Hierbei ist es von Vorteil, wenn der Interferenzteiler 3, der Retroreflektor 5 und der Referenzreflektor 6 so im Bezug zueinander und zur Anordnung für die Faltung des Meßstrahlenganges M angeordnet sind, daß sich die optischen Weglängen im Meß- und Referenzstrahlengang nur um den Betrag der gefalteten Strahllänge unterscheiden. Diese Vorausetzung ist z.B. erfüllt, wenn einerseits der Planspiegel 8 mit dem Interferometerteiler 3 und andererseits der Retroreflektor 5 und der Referenzreflektor 6 mit dem Planspiegel 9 verbunden sind. Damit ist z.B. gewährleistet, daß thermische Längenänderungen bei Verbindungselementen in den beiden Strahlengängen in gleicher Weise wirken und somit kompensiert werden.

Die in Fig.2 dargestellte Anordnung zur Faltung des Meßstrahlenganges M umfaßt den Planspiegel 8 mit einer Eintrittsöffnung 11 und den Planspiegel 9 mit einer Austrittsöffnung 12 für den Meßstrahlengang M. Zwischen den Planspiegeln 8 und 9 ist das distanzhaltende Element 10 angeordnet. An seinen Enden sind die Planspiegel 8 und 9 stoffschlüssig oder durch Ansprengen befestigt. So können die Planspiegel 8 und 9 durch Kleben, Schweißen, Löten und dergleichen mit dem Element 10 stabil verbunden sein.

Der von der Teilerfläche 7 des Interferometerteilers 3 kommende Lichtstrahl tritt durch die Eintrittsöffnung 11 in den Raum zwischen den Planspiegeln 8 und 9 ein, verläßt nach vielfacher Reflexion an den Oberflächen der Planspiegel 8 und 9 den Raum zwischen den Planspiegeln wieder durch die Austrittsöffnung 12 und trifft auf den nachgeordneten Retroreflektor 5. Von diesem Retroreflektor 5 wird der Lichtstrahl wieder zurückgeworfen, so daß er auf dem gleichen oder annähernd gleichen Wege wieder zur Teilerfläche 7 zurückkehrt. Die Orte, an denen die Reflexionen auf den Planspiegelflächen stattfinden, liegen auf einer parabelförmigen Kurve, wie die in Fig.2 durch Kreise dargestellten Reflexbilder bzw. die Reflexionsorte 13 zeigen. Durch entsprechende Dimensionierung der Winkel in Verbindung mit der Spiegeldistanz kann eine besonders kompakte Bauweise dadurch erreicht werden, daß die Reflexbilder nur am Eintrittsort O und am Austrittsort des Lichtstrahls räumlich von dem jeweiligen benachbarten Reflexbild getrennt sind (Fig.2). Der gefaltete Meßstrahl ist hier außerhalb des distanzhaltenden Elementes 10 geführt.

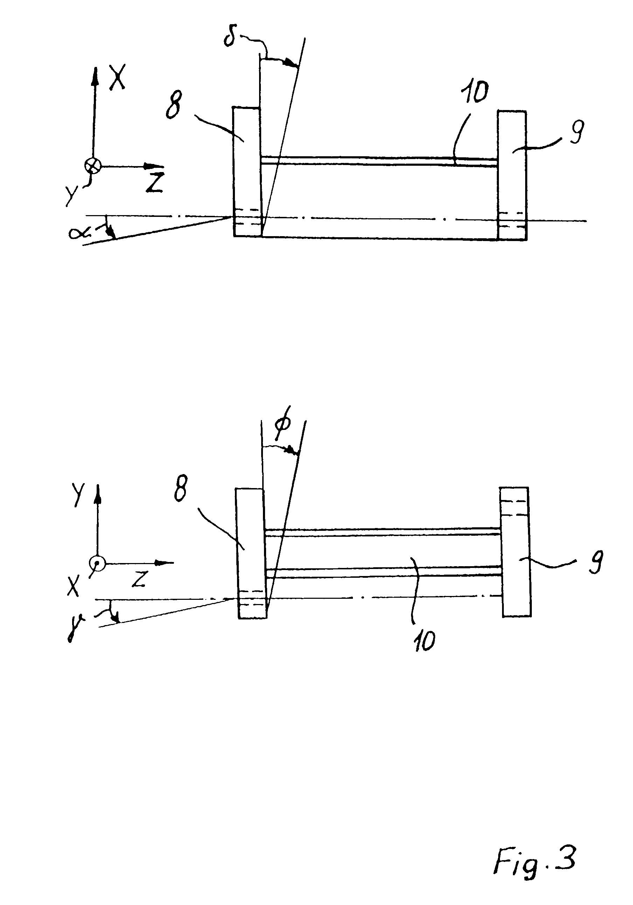

Aus der Fig.3 sind die Winkelverhältnisse zu entnehmen, die zu realisieren sind, um die gestellte Aufgabe zu lösen. Zur Erläuterung dazu wird ein Koordinatensystem X;Y;Z mit dem Koordinatenursprung am Eintrittsort O des Lichtstrahls in den Raum zwischen den Planspiegeln 8 und 9 so festgelegt, daß der erste Planspiegel 8 als Bezugsebene in der Ebene X;Y liegt. In der Ebene X;Z ist der Planspiegel 9 gegen den Planspiegel 8 um den Winkel δ geneigt angeordnet; während in der Ebene Y;Z die beiden Planspiegel 8,9 den Winkel φ miteinander einschließen. Die Eintrittsrichtung des Lichtstrahls in den Raum zwischen den Planspiegeln 8,9 ist so gewählt, daß sie mit der Ebene Y;Z einen Winkel γ und mit der Ebene X;Z einen Winkel α einschießt.

Ein derart geführter Strahlengang hat den Vorteil, daß die Reflexe an dem Eintritts- und an dem Austrittsort der Vergleichsstrecke (Weg des Lichtstrahls zwischen den Planspiegeln 8 und 9) räumlich getrennt sind. In Bereichen der reflektierenden Flächen jedoch, die vom Eintritts- und Austrittort entfernt sind, überlagern sie sich, so daß auf diese Weise eine besonders funktionssichere und raumsparende Anordnung realisiert ist.

Der vorzugsweise als Tripel- oder Kugelreflektor ausgebildete Retroreflektor 5, der in Fig.2 dem zweiten Planspiegel 9 nachgeordnet ist, gewährleistet, daß der zurücklaufende Lichtstrahl zum hinlaufenden Lichtstrahl parallel ausgerichtet ist, wobei auch ein Versatz zwischen hin- und zurücklaufendem Lichtstrahl definiert einstellbar ist.

An einem Zahlenbeispiel sollen die Größenordnungen der einzustellenden Winkel veranschaulicht werden, wobei auch andere Winkelkombinationen möglich sind. Es sind in Bogensekunden

$$\alpha = 3840 \text{ "}$$
$$\gamma = -900 \text{ "}$$
$$\delta = 240 \text{ "}$$
$$\phi = 0 \text{ "}$$

Wird der Winkel φ, den die reflektierenden Flächen in der Ebene Y;Z einschließen, wie im Beispiel angegeben mit dem Wert 0 gewählt, verläuft die Parabel, die von den Reflexionsorten beschrieben wird, symmetrisch zu der Ebene X;Z. Daraus ergeben sich insofern fertigungstechnische Vorteile für die Baugruppe aus den Planspiegeln 8,9 und dem distanzhaltenden Element 10, als die räumliche Neigung der Planspiegel zueinander weniger kompliziert ist.

Das distanzhaltende Element 10 kann gemäß einer weiteren, jedoch nicht dargestellten Ausführungsform auch als geschlossener oder durchbrochener Hohlkörper ausgebildet sein, so daß der gefaltete Meßstrahlengang M innerhalb dieses Elementes abgeschirmt geführt werden kann.

Ein weiterer Vorteil der erfindungsgemäßen Anordnung besteht darin, daß Veränderungen des optischen Weges im Referenzinterferometer, z.B. verursacht durch Verbiegungen des distanzhaltenden Elementes oder thermische Veränderungen an der Lichteintrittsstelle, durch ein Auswandern des austretenden Reflexes angezeigt werden und somit auswertbar sind.

**Patentansprüche**

1. Referenzinterferometer mit variabler Wellenlänge, mit einem Interferometerteiler (3), einem Referenzstrahlengang (R) und einem zwischen zwei Planspiegeln (8,9) verlaufenden gefalteten Meßstrahlengang (M), wobei mindestens ein distanzhaltendes Element (10) zur Realisierung einer festen gegenseitigen Lage der Planspiegel (8,9) vorgesehen ist und ein in den Raum zwischen den Planspiegeln (8,9) eingekoppelter Lichtstrahl als Meßstrahlengang (M) mehrfach von Planspiegel zu Planspiegel reflektiert und schließlich aus diesem Raum wieder ausgekoppelt wird, dadurch gekennzeichnet,

   - daß die beiden Planspiegel (8; 9) definiert so zueinander angeordnet sind, daß die Reflexionsorte (13) des Lichtstrahles auf den reflektierenden Flächen der beiden Planspiegel (8;9) auf einer Parabelkurve liegen,
   - daß im ersten der beiden Planspiegel (8) eine Eintrittsöffnung (11) zur Einkopplung des Lichtstrahles vorgesehen ist,
   - daß der zweite der beiden Planspiegel (9) eine Austrittsöffnung (12) zur Auskopplung des Lichtstrahles aufweist und
   - daß dem zweiten Planspiegel (9) ein Retroreflektor (5) derart nachgeordnet ist, daß der auf diesen auftreffende Lichtstrahl auf dem gleichen oder nahezu gleichen Wege an den Eintrittsort (O) oder in dessen Nähe innerhalb der Eintrittsöffnung (11) zurückgeführt wird.

2. Referenzinterferometer mit variabler Wellenlänge nach Anspruch 1, dadurch gekennzeichnet, daß die Eintrittsrichtung des Lichtstrahles in den Raum zwischen den Planspiegeln (8,9) und die Lage der Planspiegel (8,9) zueinander in einem Dreikoordinatensystem X;Y;Z, in welchem der Eintrittsort (O) dem Koordinatenursprung entspricht und die reflektierende Fläche des Planspiegels (8) in der Ebene X;Y liegt, so festgelegt sind, daß die Eintrittsrichtung mit der Ebene Y;Z einen Winkel γ und mit der Ebene X;Z einen Winkel α einschließt und die reflektierende Fläche des Planspiegels (9), in der Ebene Y;Z gemessen, mit einem Winkel φ und in der Ebene X;Z gemessen, mit einem Winkel δ gegen die reflektierende Fläche des Planspiegels (8) geneigt ist.

3. Referenzinterferometer mit variabler Wellenlänge nach Anspruch 1 und 2, dadurch gekennzeichnet, daß der Winkel φ=0 ist, der Winkel γ die Forderung

$$\gamma = \arctan \Delta y/2nl$$

erfüllt und die Winkel α und δ den Bedingungen genügen:

$$\alpha - \delta = d/2l \qquad \text{und} \qquad \alpha = \delta/2 \cdot (n - 1/n)$$

mit n der Gesamtanzahl Reflexionen an beiden Spiegeln, l der Länge der Vergleichsstrecke, d dem Abstand des Eintrittsortes (O) vom benachbarten Reflexort (13) auf demselben Planspiegel (8) und Δy dem Abstand zwischen Eintrittsort (O) und letztem Reflex auf dem Planspiegel (8) in Richtung der Koordinate Y.

4. Referenzinterferometer mit variabler Wellenlänge nach Anspruch 1 bis 3, dadurch gekennzeichnet, daß das distanzhaltende Element (10) aus alterungsbeständigem und thermisch invariantem Material besteht.

5. Referenzinterferometer mit variabler Wellenlänge nach Anspruch 1 bis 4, dadurch gekennzeichnet, daß das distanzhaltende Element (10) mit dem ersten und dem zweiten Planspiegel (8,9) eine Doppel-T-förmige Anordnung bilden und der gefaltete Lichtstrahl außerhalb des distanzhaltenden Elementes (10) geführt ist.

6. Referenzinterferometer mit variabler Wellenlänge nach Anspruch 1 bis 4, dadurch gekennzeichnet, daß das distanzhaltende Element (10) als Hohlkörper ausgebildet, mit mindestens einer Strahleintritts- und mindestens einer Strahlaustrittsöffnung versehen und der gefaltete Lichtstrahl innerhalb des Hohlkörpers geführt ist.

7. Referenzinterferometer mit variabler Wellenlänge nach Anspruch 1 bis 6, dadurch gekennzeichnet, daß die Planspiegel (8,9) mit dem distanzhaltenden Element (10) stoffschlüssig oder durch Ansprengen verbunden sind.

8. Referenzinterferometer mit variabler Wellenlänge nach Anspruch 1 bis 7, dadurch gekennzeichnet, daß das Licht über Lichtleitfasern in den Interferometerteiler (3) eingekoppelt ist.

**Claims**

1. A variable wavelength reference interferometer, comprising an interferometer splitter (3), a reference ray path (R) and a folded measurement ray path (M) extending between two plane mirrors (8, 9), at least one spacer element (10) being provided to embody a fixed mutual position of the plane mirrors (8, 9) and a ray of light input coupled into the space between the plane mirrors (8, 9) being repeatedly reflected as a measurement ray path (M) from one plane mirror to the other and finally being output coupled from said space, characterised in that

   - the two plane mirrors (8; 9) are so arranged in defined relationship to one another that the places of reflection (13) of the ray of light on the reflecting surfaces of the two plane mirrors (8; 9) lie on a parabola curve;

   - in that an entry aperture (11) for input coupling of the ray of light is provided in the first of the two plane mirrors (8),

   - in that the second of the two plane mirrors (9) has an exit aperture (12) for output coupling of the ray of light and

   - in that the second plane mirror (9) is followed by a retroreflector (5) so that the ray of light meeting the same is returned over the same or substantially the same path to the place of entry (0) or in its vicinity inside the entry aperture (11).

2. A variable wavelength reference interferometer according to claim 1, characterised in that the direction of entry of the ray of light into the space between the plane mirrors (8, 9) and the position of the plane mirrors (8, 9) in relation to one another are so fixed in a three-co-ordinate system X;Y;Z, in which the place of entry (0) corresponds to the co-ordinate origin and the reflecting surface of the plane mirror (8) lies in the plane X;Y, that the direction of entry includes an angle $\gamma$ with the plane Y;Z and an angle $\alpha$ with the plane X;Z and the reflecting surface of the plane mirror (9), measured in the plane Y;Z, is inclined by an angle $\phi$, and measured in the plane X;Z, is inclined by an angle $\delta$ to the reflecting surface of the plane mirror (8).

3. A variable wavelength reference interferometer according to claims 1 and 2, characterised in that the angle $\phi$ is equal to 0, the angle $\gamma$ satisfies the condition:

$$\gamma = \arctan \Delta y/2nl$$

and the angles $\alpha$ and $\delta$ satisfy the conditions:

$$\alpha - \delta = d/2l \text{ and } \alpha = \delta/2^*(n- 1/n)$$

where n is the total number of reflections at the two mirrors, 1 is the length of the comparison path, d the distance of the place of entry (O) from the adjacent reflection place (13) on the same plane mirror (8) and $\Delta y$ is the distance between the place of entry (0) and the last reflection on the plane mirror (8) in the direction of the co-ordinate Y.

4. A variable wavelength reference interferometer according to claims 1 to 3, characterised in that the spacer element (10) consists of ageing-resistant and thermally invariable material.

5. A variable wavelength reference interferometer according to claims 1 to 4, characterised in that the spacer element (10) together with the first and second plane mirrors (8, 9) forms a double-T arrangement and the folded light ray is guided outside the spacer element (10).

6. A variable wavelength reference interferometer according to claims 1 to 4, characterised in that the spacer element (10) is constructed as a hollow member, is provided with at least one ray entry aperture and at least one ray exit aperture and the folded light ray is guided inside the hollow member.

7. A variable wavelength reference interferometer according to claims 1 to 6, characterised in that the plane mirrors (8, 9) are connected to the spacer element (10) by way of the material or by wringing.

8. A variable wavelength reference interferometer according to claims 1 to 7, characterised in that the light is input coupled to the interferometer splitter (3) via optical fibres.

**Revendications**

1. Interféromètre de référence de longueur d'onde variable, comportant un diviseur (3), un parcours de rayons de référence (R) et un parcours de rayon de mesure (M) plié qui s'étend entre deux miroirs plans (8, 9), un élément (10) au moins qui maintient la distance étant prévu pour réaliser une position réciproque fixe des miroirs plans (8, 9) et un rayon lumineux, envoyé dans l'espace entre les miroirs plans (8, 9), étant réfléchi en tant que parcours de rayon de mesure (M), plusieurs fois, d'un miroir plan à l'autre et ce rayon lumineux étant enfin découplé de cet espace, caractérisé en ce que

- les deux miroirs (8 ; 9) sont disposés l'un par rapport à l'autre de manière définie de façon que les lieux de réflexion (13) du rayon lumineux sur les surfaces réfléchissantes des deux miroirs (8 ; 9) se situent sur une courbe parabolique,

- dans le premier des deux miroirs plans (8) est prévu un orifice d'entrée (11) pour l'entrée du rayon lumineux,

- le deuxième des deux miroirs plans (9) présente un orifice de sortie (12) pour la sortie du rayon lumineux et

- derrière le deuxième miroir plan (9) est disposé un rétroréflecteur (5) de manière que le rayon lumineux qui parvient sur celui-ci soit renvoyé, sur le même trajet ou presque, au lieu d'entrée (O) ou à proximité de celui-ci à l'intérieur de l'orifice d'entrée (11).

2. Interféromètre de référence de longueur d'onde variable selon la revendication 1, caractérisé en ce que la direction d'entrée du rayon lumineux dans l'espace compris entre les miroirs plans (8, 9) et la position des miroirs plans (8, 9) l'un par rapport à l'autre, dans un système à trois coordonnées X ; Y ; Z, dans lequel le lieu d'entrée (O) correspond à l'origine des coordonnées et la surface réfléchissante du miroir plan (8) se situe dans le plan X ; Y, sont fixés de manière que la direction d'entrée forme avec le plan Y ; Z un angle $\gamma$ et avec le plan X ; Z un angle $\alpha$, et de manière que la surface réfléchissante du miroir plan (9) mesurée dans le plan Y ; Z, soit inclinée d'un angle $\phi$ et, mesurée dans le plan X ; Z, soit inclinée d'un angle $\delta$ par rapport à la surface réfléchissante du miroir plan (8).

3. Interféromètre de référence de longueur d'onde variable selon les revendications 1 et 2, caractérisé en ce que l'angle $\phi = 0$, l'angle $\gamma$ satisfait à l'exigence

$$\gamma = \arctan \Delta y/2nl$$

et les angles $\alpha$ et $\delta$ satisfont aux conditions:

$$\alpha - \delta = d/2l \text{ et } \alpha = \delta/2*(n-1/n),$$

n étant le nombre total de réflexions sur les deux miroirs, 1 la longueur du parcours de comparaison, d la distance du lieu d'entrée (O) par rapport au lieu de réflexion (13) voisin sur le même miroir plan (8) et $\Delta y$ la distance entre le lieu d'entrée (O) et la dernière réflexion sur le miroir plan (8), dans la direction des coordonnées Y.

4. Interféromètre de référence de longueur d'onde variable selon les revendications 1 à 3, caractérisé en ce que l'élément (10) qui maintient la distance est réalisé en un matériau qui résiste au vieillissement et qui est stable thermiquement.

5. Interféromètre de référence de longueur d'onde variable selon les revendications 1 à 4, caractérisé en ce que l'élément (10) qui maintient la distance forme avec le premier et le deuxième miroir plan (8, 9) un dispositif en double T et le rayon lumineux plié est guidé à l'extérieur de l'élément (10) qui maintient la distance.

**6.** Interféromètre de référence de longueur d'onde variable selon les revendications 1 à 4, caractérisé en ce que l'élément (10) qui maintient la distance est réalisé sous la forme d'un corps creux, est pourvu d'au moins un orifice d'entrée de rayon et d'au moins un orifice de sortie de rayon et le rayon lumineux plié est guidé à l'intérieur du corps creux.

**7.** Interféromètre de référence de longueur d'onde variable selon les revendications 1 à 6, caractérisé en ce que les miroirs plans (8, 9) sont assemblés par adhérence de matière à l'élément (10) qui maintient la distance ou par accolement.

**8.** Interféromètre de référence de longueur d'onde variable selon les revendications 1 à 7, caractérisé en ce que la lumière est envoyée dans le diviseur d'interféromètre (3) par des fibres optiques.

Fig.1

Fig.2

Fig. 3